(19) **Europäisches Patentamt**

**European Patent Office**

**Office européen des brevets**

(11) **EP 1 657 658 A1**

(12) **EUROPEAN PATENT APPLICATION**
published in accordance with Art. 158(3) EPC

(43) Date of publication:
17.05.2006 Bulletin 2006/20

(51) Int Cl.:
*G06F 17/50* (1995.01)

(21) Application number: 05704304.4

(22) Date of filing: 25.01.2005

(86) International application number:
PCT/JP2005/001308

(87) International publication number:
WO 2005/103966 (03.11.2005 Gazette 2005/44)

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 21.04.2004 JP 2004125086

(71) Applicant: NSK LTD.
Shinagawa-ku,
Tokyo 141-8560 (JP)

(72) Inventors:
• ICHIKAWA, Akira
NSK Ltd.
Fujisawa-shi, Kanagawa 251-8501 (JP)

• IKEDA, Masaki
NSK Ltd.
Fujisawa-shi, Kanagawa 251-8501 (JP)
• YANAGISHITA, Shinichi
NSK Ltd.
Fujisawa-shi, Kanagawa 251-8501 (JP)

(74) Representative: Grünecker, Kinkeldey,
Stockmair & Schwanhäusser
Anwaltssozietät
Maximilianstrasse 58
80538 München (DE)

(54) **AUTOMATIC DESIGNING SYSTEM, AUTOMATIC DESIGNING METHOD, AND AUTOMATIC DESIGNING PROGRAM**

(57) Automated design means 72 performs automated design based on design requirement particulars and designer discretion particulars inputted from design requirement particular input means 1 and designer discretion particular input means 2 and design rules called from a design rule database 4 by design rule database calling means 71. Determination means 74 automatically determines whether a design result of the automated design by the automated design means 72 is good or not based on determination rules called from a determination rule database 6 by determination rule database calling means 73. The determination rules from the determination rule database 6 include rules to be satisfied by design of a product in the case of manufacturing the product.

FIG. 1

EP 1 657 658 A1

**Description**

<Technical Field>

The present invention relates to an automated design system, an automated design method and an automated design program for performing automated design using a computer.

<Background Art>

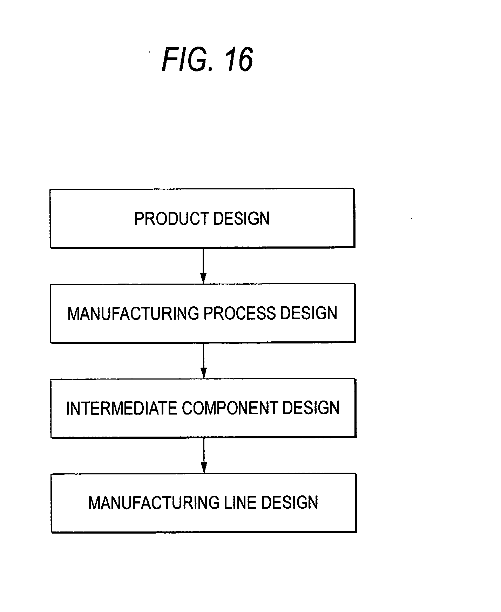

A flow of general design processing of a product in various manufacturing industries is broadly shown in, for example, Fig. 16. When a product is designed by an automated design system, a calculation formula, a calculation procedure, etc. necessary for design are previously inputted to a database of a computer and design requirement particulars (for example, design requirement particulars required by a designer of manufacturing industry, design requirement particulars required from a customer of its manufacturing industry, etc.) required with respect to the product targeted for automated design are inputted to the computer and based on the calculation formula and the calculation procedure inputted to the database of the computer, the computer is made to perform the automated design and a design result is displayed on paper by, for example, printing at the completion of the design. Then, designer discretion particulars are inputted to the computer at the discretion of a designer based on rules (described below) with respect to the design result as necessary.

The design result acquired by the automated design is mainly evaluated by designers (for example, persons belonging to product design departments such as a development department, a technical department) taking charge of its design normally. In that case, the designers evaluate the design result in consideration of information about rules including conditions, know-how, etc. about manufacture or design of a product told from production related departments such as a production engineering department, a reliability management department, a production department, a materials department or a quality control department. For example, when information that there are no stocks of components necessary to manufacture the product targeted for the design result and it is difficult to acquire the components is obtained from the materials department, the design result itself will become invalid basically. In such a case, at the discretion of the designers, designer discretion particulars are inputted to the computer and automated design is again performed. Such processing is repeated until all the rules are satisfied basically.

As one example of an automated design system for performing automated design using a computer, a design support system for performing design based on design specifications and drawing specifications standardized is known (for example, see JP-A-2000-20557). This design support system is provided with a design specification table in which design specification data standardized is stored and a reference value table provided with a design standard value table etc. for setting standard value data, and a control part performs design by performing reading of design conditions, reference to the design specification table in which the design specification data standardized is stored, processing for fetching necessary data from the reference value table according to this design specification table, etc. using a core program at the time of design. According to this design support system, time and labor expended in the design can be reduced considerably.

However, the conventional automated design system has merely been developed for the main purpose of achieving high efficiency of product design by a speedup in design work, a reduction in labor, etc. , and evaluation of the design result has actually been conducted at manual works by skilled-designers, for example, matching with information told from production related departments, transcription checks, or calculation using an electronic calculator. Thus, as the conventional automated design system is frequently used, the amount of business per designer taken to evaluate the design result becomes large and conversely, it becomes difficult to achieve high efficiency of the product design in total and also it becomes difficult to sufficiently evaluate the design result and a decrease in design quality tends to occur. Therefore, it is extremely difficult to achieve high quality and high efficiency of the product design with respect to recent advanced and complicated design requirement particulars. Consequently, an increase in the number of designers evaluating the design result leads to an increase in cost (that is, labor cost rises).

<Disclosure of the Invention>

The invention has been implemented in view of the circumstances described above, and an object of the invention is to provide an automated design system, an automated design method and an automated design program capable of achieving high quality and high efficiency of product design at low cost.

(1) In order to attain the object described above, an automated design system according to the invention is an automated design system for performing automated design of a product using design requirement particulars required with respect to the product targeted for the automated design, designer discretion particulars by discretion of a designer with respect to design of the product and a design rule necessary for the design of the product, and comprises design rule storage means for storing the design rule, automated design means for performing automated design using the design requirement particulars, the designer discretion particulars and the design rule, determination rule input means for inputting a determination rule including a rule to be satisfied by design of the product in the case of manufacturing the product, determination rule storage means for storing the determination rule, and design result determination means for determining whether a design result obtained by the automated design means is good or not based on the determination rule stored in the determination rule storage means.

(2) The automated design system of (1) described above preferably further comprises determination result storage means for storing a determination result obtained by the design result determination means and the design rule stored in the design rule storage means is updated based on the determination result.

In the case of configuring the automated design system as shown in (1) described above, it is automatically determined whether a design result obtained by the automated design means is good or not based on the determination rule including a rule to be satisfied by design of the product in the case of manufacturing the product, so that high quality and high efficiency of product design can be achieved at low cost. Incidentally, when the latest determination rule is inputted to the determination rule input means; it can be determined whether a design result is good or not based on the latest determination rule.

Further, in the case of configuring the automated design system as shown in (2) described above, the design rule stored in the design rule storage means is updated based on the determination result obtained by the design result determination means, so that automated design can be performed based on the latest design rule.

(3) In order to attain the object described above, an automated design method according to the invention has a design rule storage step of previously storing a design rule necessary for design of a product targeted for automated design, a determination rule storage step of previously storing a determination rule including a rule to be satisfied by design of the product in the case of manufacturing the product, a design requirement particular input step of inputting design requirement particulars required with respect to the product, a designer discretion particular input step of inputting designer discretion particulars by discretion of a designer with respect to design of the product, an automated design step of reading out the design rule stored in the design rule storage step and performing automated design using the design rule, the design requirement particulars and the designer discretion particulars, and a design result determination step of reading out the determination rule stored in the determination rule storage step and automatically determining whether a design result obtained by the automated design step is good or not based on the determination rule.

(4) The automated design method of (3) described above preferably further has a determination result storage step of storing a determination result obtained by the design result determination step, and a design rule updating step of reading out the determination result stored in the determination result storage step and updating the design rule stored in the design rule storage step based on the determination result.

In the case of configuring the automated design method as shown in (3) described above, it is automatically determined whether a design result obtained by the automated design step is good or not based on the determination rule including a rule to be satisfied by design of the product in the case of manufacturing the product, so that high quality and high efficiency of product design can be achieved at low cost. Incidentally, when the latest determination rule is stored, it can be determined whether a design result is good or not based on the latest determination rule.

Further, in the case of configuring the automated design method as shown in (4) described above, the design rule is updated based on the determination result obtained by the design result determination step, so that automated design can be performed based on the latest design rule.

(5) In order to attain the object described above, an automated design program according to the invention is a program for making a computer execute processing including design rule storage processing for previously storing a design rule necessary for design of a product targeted for automated design, determination rule storage processing for previously storing a determination rule including a rule to be satisfied by design of the product in the case of manufacturing the product, design requirement particular input processing for inputting design requirement particulars required with respect to the product, designer discretion particular input processing for inputting designer discretion particulars by discretion of a designer with respect to design of the product, automated design processing for reading out the design rule stored in the design rule storage processing and performing automated design using the design rule, the design requirement particulars and the designer discretion particulars, and design result determination processing for reading out the determination rule stored in the determination rule storage processing and automatically determining whether a design result obtained by the automated design processing is good or not based on the determination rule.

(6) The automated design program of (5) described above is preferably a program for making a computer execute processing further including determination result storage processing for storing a determination result obtained by the design result determination processing, and design rule updating processing for reading out the determination result stored in the determination result storage processing and updating the design rule stored in the design rule storage processing based on the determination result.

In the case of configuring the automated design program so that the processing of (5) described above is executed by the computer, it is automatically determined whether a design result obtained by the automated design processing is good or not based on the determination rule including a rule to be satisfied by design of the product in the case of manufacturing the product, so that high quality and high efficiency of product design can be achieved at lowcost. Incidentally, when the latest determination rule is stored, it can be determined whether a design result is good or not based on the latest determination rule.

Further, in the case of configuring the automated design program so that the processing of (6) described above is executed by the computer, the design rule is updated based on the determination result obtained by the design result determination processing, so that automated design can be performed based on the latest design rule.

Incidentally, a record medium on which the automated design program according to the invention described above is recorded, in other words, a computer-readable record medium on which the program for making a computer execute processing including the processing of (5) or (6) described above is recorded may be formed, and it goes without saying that such a record medium has excellent action and effect similar to those of the automated design program according to the invention.

As an example of the computer-readable record medium, a semiconductor record medium such as ROM (that is, Read Only Memory) or RAM (that is, Random Access Memory), an optical record medium such as DVD (that is, Digital Versatile Disk)-ROM, DVD-RAM, CD (that is, Compact Disc)-ROM or CD-RW (that is, Rewritable), a magnetic record medium such as a hard disk or a floppy disk, and a magneto-optical record medium such as an MO (that is, Magneto Optical Disk) are given, but any record medium may be used as long as the computer-readable record medium is used. Therefore, the computer could properly be provided with a recording/readout device corresponding to the record medium according to the record medium adopted.

As described above, according to the invention, high quality and high efficiency of product design can be achieved at low cost.

<Brief Description of the Drawings>

Fig. 1 is a diagram showing a schematic configuration of one embodiment of an automated design system according to the invention;
Fig. 2 is a diagram showing a schematic action flowchart in the case that the automated design system of the invention performs automated design of a ball bearing;
Fig. 3 is a flowchart showing details of automated design processing by the automated design system of the invention;
Fig. 4 is a flowchart showing details of design result automated decision processing by the automated design system of the invention;
Fig. 5 is a diagram showing dimension variable names of a built-in housing in which the ball bearing is built;
Fig. 6 is a diagram showing automated design calculation formulas and dimension variable names of the ball bearing;
Fig. 7 is a diagram showing an example of design rule data every product type stored in a design rule database of the automated design system of the invention;
Fig. 8 is a diagram showing a document example of a design rule stored in the design rule database in a document format;
Fig. 9 is a diagram showing an example of a determination rule stored in a determination rule database;
Fig. 10 is a diagram showing an example of storage data of a determination result database;
Fig. 11 is a diagram showing a design condition input screen of design requirement particular input means;
Fig. 12 is a diagram showing a designer discretion particular input screen of designer discretion particular input means;
Fig. 13 is a diagram showing an example of a design result screen;
Fig. 14 is a diagram showing an example of a design help screen;
Fig. 15 is a diagram showing an example of a determination result screen; and
Fig. 16 is a flowchart showing an outline of general design processing of a product in various manufacturing industries.

Incidentally, in the drawing, numeral 1 is design requirement particular input means, and numeral 2 is designer discretion particular input means, and numeral 3 is design rule database input means, and numeral 4 is a design rule database (design rule storage means), and numeral 5 is determination rule database input means (determination rule input means), and numeral 6 is a determination rule database (determination rule storage means), and numeral 7 is automated design and automatic determination processing means, and numeral 8 is design outcome creation means, and numeral 9 is design outcome output means, and numeral 10 is a design outcome database, and numeral 11 is retrieval processing means, and numeral 12 is retrieval result displaymeans, and numeral 71 is design rule database calling means, and numeral 72 is automated design means, and numeral 73 is determination rule database calling means, and numeral 74 is determination means (design result determination means), and numeral 75 is a determination result database (determination result storage means) .

<Best Mode for Carrying Out the Invention>

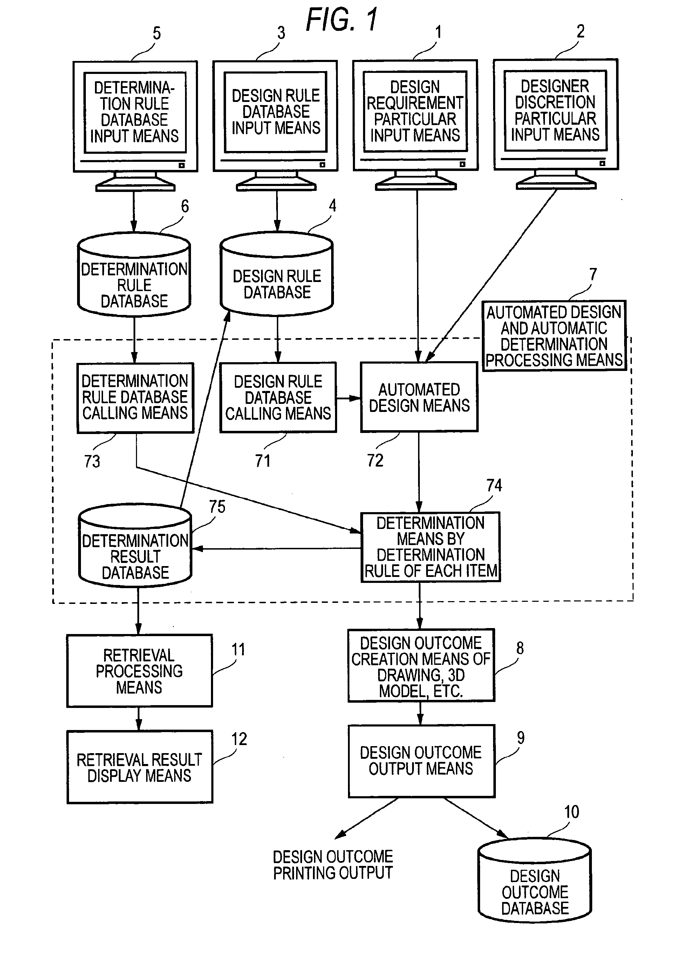

One embodiment according to the invention will be described below in detail by taking design of a ball bearing as an example based on Figs. 1 to 15.

An automated design system shown in Fig. 1 comprises design requirement particular input means 1, designer discretion particular input means 2, design rule database input means 3, a design rule database 4, determination rule database input means 5, a determination rule database 6, automated design and automatic determination processing means 7, design outcome creation means 8 of drawings, 3D models, etc., design outcome output means 9, a design outcome database 10, retrieval processing means 11, and retrieval result display means 12.

Incidentally, the automated design system of Fig. 1 may be a system constructed of one computer and instead, for example, may be a system in which the design requirement particular input means 1, the designer discretion particular input means 2, the design rule database input means 3 and the determination rule database input means 5 are constructed of a terminal apparatus such as at least one computer and the terminal apparatus is communicably connected to a host computer comprising the design rule database 4, the determination rule database 6, the automated design and automatic determination processing means 7, etc. through a network.

The design requirement particular input means 1 is an apparatus in which a designer inputs design requirement particulars (for example, design requirement particulars required by the designer, design requirement particulars required from a customer, etc.) required with respect to a product targeted for automated design, that is, a ball bearing. The designer discretion particular input means 2 is an apparatus for inputting design discretion particulars by discretion of the designer with respect to design of the ball bearing.

The design rule database input means 3 is an apparatus for inputting design rules made of calculation formulas, threshold values, etc. necessary for design of various ball bearings. The design rule database 4 is a database for storing various design rules inputted to the design rule database input means 3.

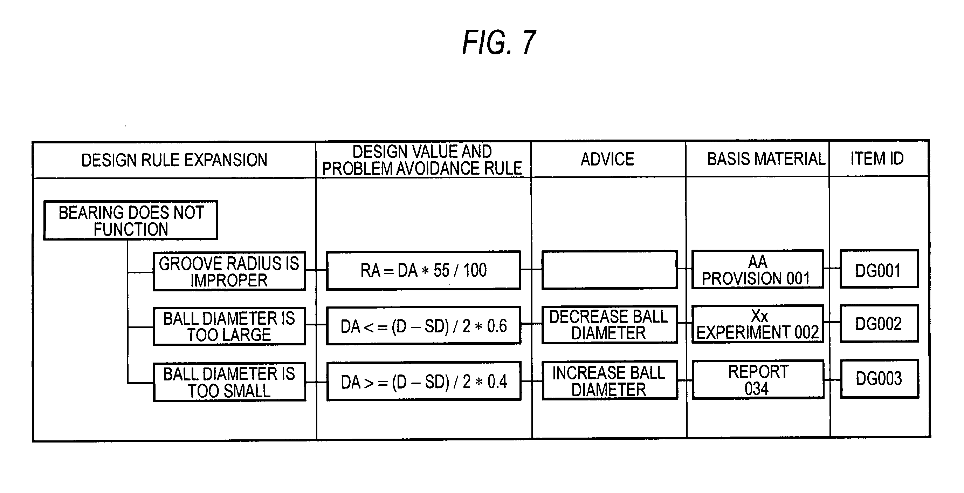

As shown in Fig. 7, as the calculation formulas and the threshold values necessary for the design, problems occurring in a product, problem avoidance rules for mathematizing a method of avoiding the problems, advice on a handling method of the case that the problem avoidance rules cannot be satisfied, names of basis materials of the problem avoidance rules and items ID without overlap are stored in the design rule database 4 as data.

As shown in Fig. 7, with respect to a ball diameter DA, a housing width D and a shaft diameter SD, for example, in order to avoid a problem that the ball diameter is too large, a problem avoidance rule mathematized as shown in the following formula (1) is set.

$$DA <= (D-SD)/2*0.6 \ ... \ (1)$$

Advice of the case that the formula (1) is not be satisfied is the advice that "the ball diameter is decreased ". Also, a basis material of its advice is "Xx experiment 002".

In extraction of the problems occurring in the product, it is easy to arrange the items in the case of applying a QC (quality control) related technique such as a characteristic diagram, but other theories or methods may be used.

When a new design rule is generated by advance in design, the latest design rule can always be stored in the design rule database 4 by inputting the new design rule to the design rule database input means 3.

Also, when trouble occurs during design and its cause is sought out and a rule of avoiding its failure is found, a rule of avoiding the previous failure is also stored in the design rule database 4 by inputting the rule of avoiding its failure. As a result of this, it can be constructed so as not to generate similar trouble.

In the case of mounting the database into the system, a dedicated database system or a data input screen can also be constructed using a relational database tool etc. , but the database can also be mounted simply using spreadsheet software etc.

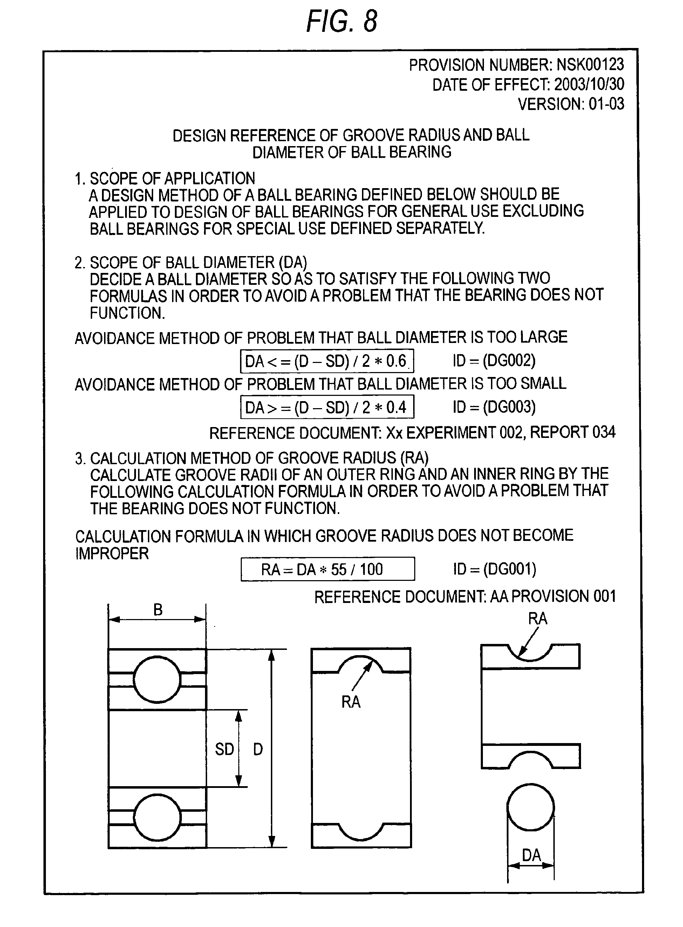

A design rule database storage document shown in Fig. 8 includes information similar to that of the table format shown in Fig. 7, and is stored in a format capable of being used and seen as a design provision document. When word processor software or spreadsheet software, etc. are in mounting into the system, the mounting is easy, but other methods may be used. The design rule database 4 can also store data in the table format as shown in Fig. 7, but may store data in the document format in which the design provision is defined as shown in Fig. 8. In this case, centralized management of threshold values or calculation formulas used in actual calculation or decision and documents in which they are defined can be performed in the design rule database. A calculation method of automatic calculation processing can simultaneously be modified by modifying the design provision document and retaining the design provision document in the design rule database 4. Using a label function of the word processor software or a column name etc. of a matrix of the spreadsheet software, IDs without overlap are attached to each of the calculation formulas or the threshold values forming a part of the document and necessary calculation formulas or threshold values are fetched from a corresponding program by the IDs and thereby mounting can be performed. Also, other methods may be used as long as a program can be linked to a part of the document.

The determination rule database input means 5 is means for inputting rules for determining whether a design result is good or not, and the determination rule database 6 is means for storing the determination rules.

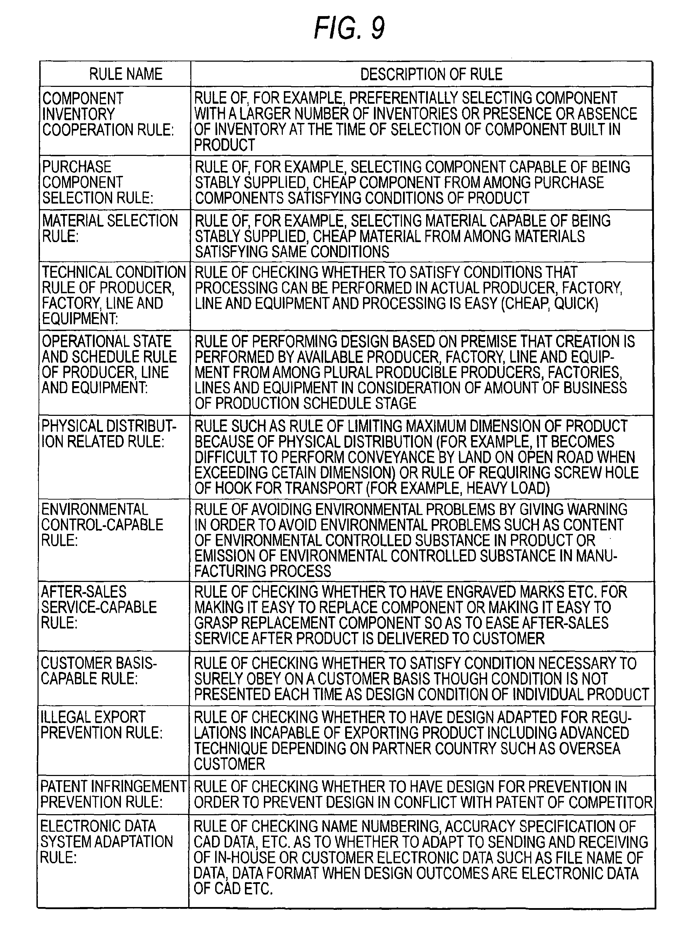

Fig. 9 shows an example of the determination rules stored in the determination rule database 6. As shown in this Fig. 9, the determination rules stored in the determination rule database 6 include rules including conditions, know-how, etc. about manufacture or design of a product told from production related departments such as a production engineering department, a reliability management department, a production department, a materials department or a quality control department. The determination rules include rules based on information about, for example, processing or quality control from the production related departments (for example, technical condition rules of a producer, a factory, a line and equipment, operational state and schedule rules of a producer, a line and equipment), rules based on information about materials control, etc. (for example, component inventory cooperation rules, purchase component selection rules), rules based on information about control (for example, environmental control-capable rules, illegal export prevention rules), etc. That is, the determination rules stored in the determination rule database 6 (in other words, determination rules inputted to the determination rule database input means 5) include rules to be satisfied by design of the product in the case of manufacturing the product (the ball bearing in the present example).

When a change in the information told from the production related departments is made, the determination rules can always store the latest information in the determination rule database 6 by inputting its changed determination rule or a changed element in the determination rule from the determination rule database input means 5.

The automated design and automatic determination processing means 7 is means for performing automated design and automatic determination of a design result, and comprises the design rule database calling means 71, the automated design means 72, the determination rule database calling means 73, the determination means 74 by a determination rule of each item, and the determination result database 75 as shown in Fig. 1.

The design rule database calling means 71 is means for calling a design rule from the design rule database 4. The automated design means 72 performs automated design based on design requirement particulars and designer discretion particulars inputted from the design requirement particular input means 1 and the designer discretion particular input means 2 and the design rule called from the design rule database 4 by the design rule database calling means 71.

The determination rule database calling means 73-is means for calling a determination rule from the determination rule database 6. The determination means 74 automatically determines whether a design result acquired by the automated design means 72 is good or not based on the determination rule of each item called from the determination rule database 6 by the determination rule database calling means 73 and then, the determination result database 75 stores a determination result by the determination means 74.

The determination rule of each item called from the determination rule database 6 by the determination rule database calling means 73 includes rules to be satisfied by design of the product in the case of manufacturing the product (the ball bearing in the present example), so that even when a design result acquired by the automated design means 72 is not displayed on paper, the determination means 74 automatically determines whether or not its design result obeys the rule as soon as the design result is acquired. For example, it is automatically determined whether or not material selection rules shown in Fig. 9 are obeyed by determining whether or not a cheap material or a material capable of being stably supplied, etc. are selected from among the design results.

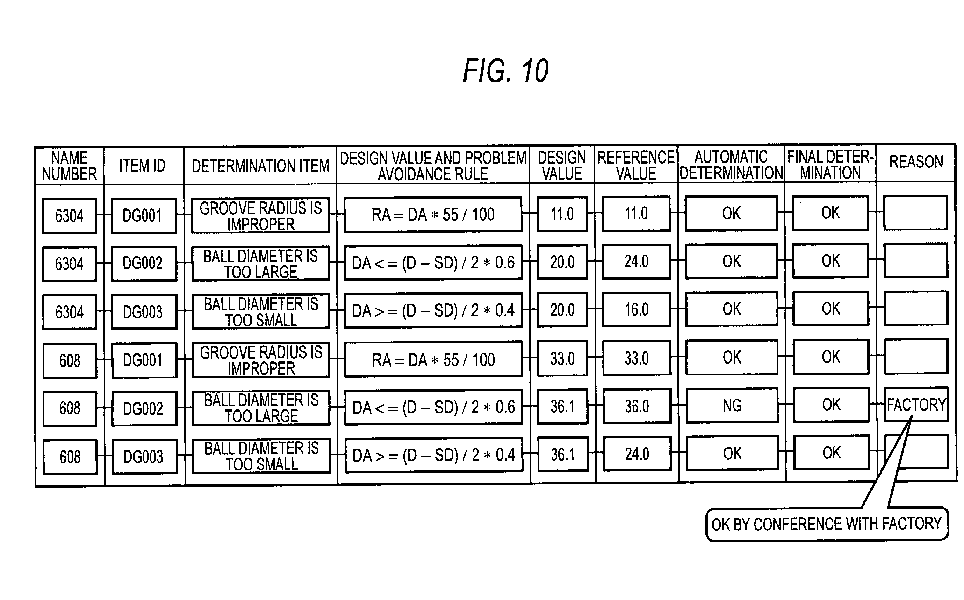

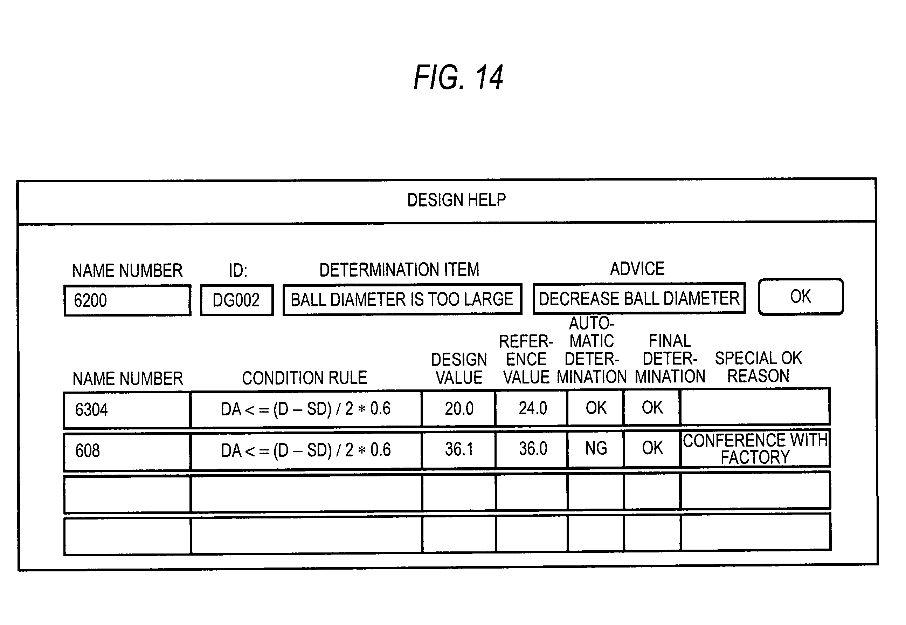

As shown in Fig. 10, name numbers, item IDs, determination items, design value and problem avoidance rules, design values, reference values, automatic determination results, final determination results and reasons are stored in the determination result database 75 as data. With respect to the final determination results among them, in some cases, the determination result is modified by hand and the final determination result at that time differs from the automatic determination result. In such cases, the reason why the different result is acquired is stored in the determination result database 75 as reason data. New data is added at the timing of confirming the design value of each of the name numbers. A state in which data of the two name numbers of 6304 and 608 designed in the past has already been stored is shown in an example of Fig. 10. By retaining such data, a design help screen as shown in Fig. 14 can be displayed on a display of the automated design system.

Also, as shown in Fig. 1, the determination result database 75 is linked to the design rule database 4 and a design rule is updated based on a determination result obtained by the determination means 74, so that the automated design means 72 performs automated design based on the latest design rule by reflecting the past determination result on the design rule of the design rule database 4.

The design outcome creation means 8 of drawings, 3D models, etc. is means for creating design outcomes so that design outcomes such as 3D models or drawings for displaying various information including design results outputted from the automated design and automatic determination processing means 7 can be outputted from the design outcome output means 9, and the design outcome output means 9 outputs various information including the design results to a printer and the design outcome database 10. The design outcome database 10 stores data of the design outcomes acquired by the automated design.

The retrieval processing means 11 is means for retrieving the past determination results stored in the determination result database 75, and the retrieval result display means 12 is means for displaying the retrieval result on the display of the automated design system. The past determination results can be retained and seen and thereby, decision of a designer can be supported and a decrease in mistakes and an improvement in design speed can be expected.

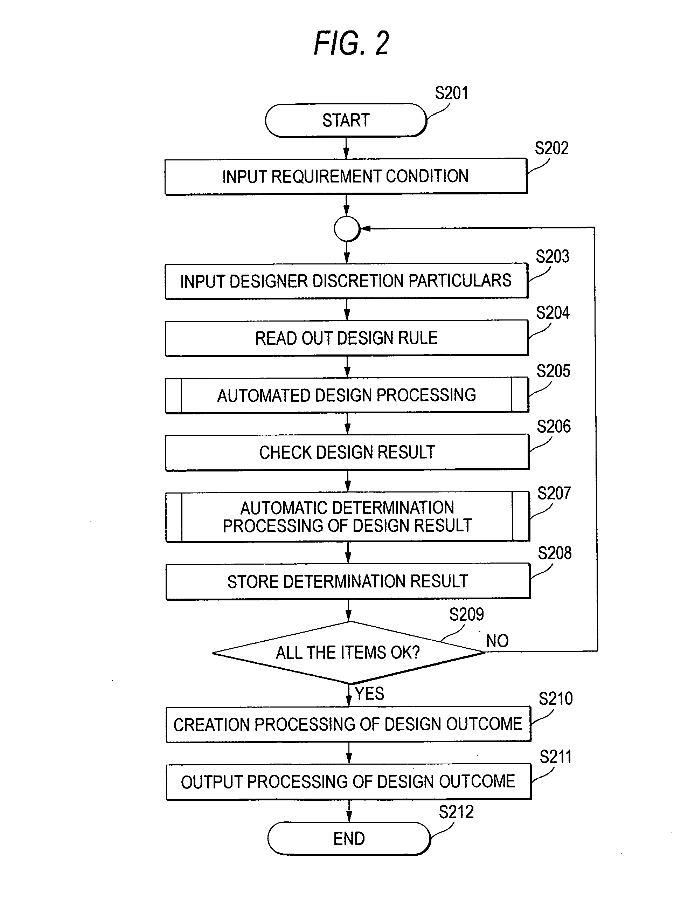

Next, an action of the case of performing automated design of a ball bearing using the automated design system of Fig. 1 will be described using Fig. 2.

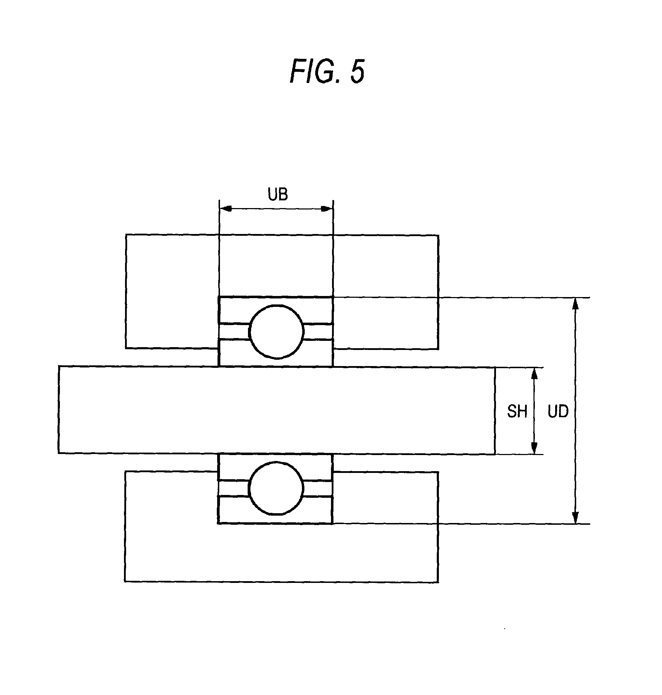

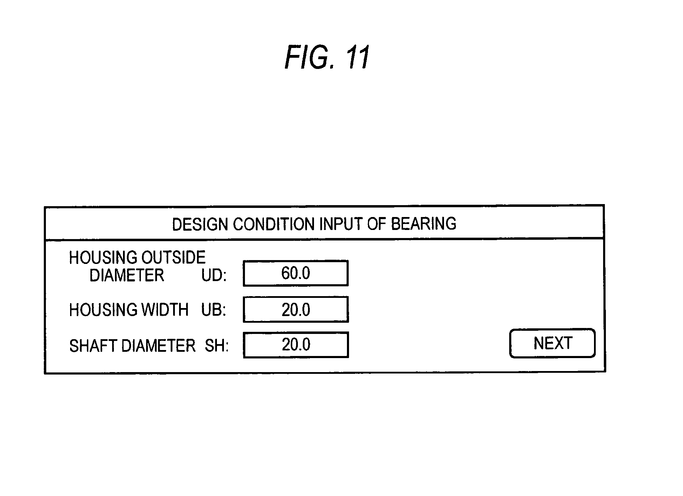

When design is started in step S201, a designer inputs each of the dimension values to the design requirement particular input means 1, for example, in order to specify conditions of dimensions of a housing in which a ball bearing required from a customer is built in step S202. In Fig. 5, UB is a variable representing a width (hereinafter abbreviated as "housing width") of a ball bearing reception groove of the housing, and UD is a variable representing an outside diameter (hereinafter abbreviated as "housing outside diameter") of the ball bearing reception groove of the housing, and SH is a variable representing a shaft diameter. In addition to such shape conditions, variable names are given to built-in environmental data of a product, for example, a load, a life or a temperature to form a data structure. Fig. 11 is a diagram showing a design condition input screen of the design requirement particular input means 1. When the dimension values are inputted, the designer sequentially inputs a value of the housing outside diameter UD, a value of the housing width UB and a value of the shaft diameter SH and inputs design requirement particulars on the screen shown in this Fig. 11. After design condition particulars are inputted, "Next" is clicked and the input is confirmed.

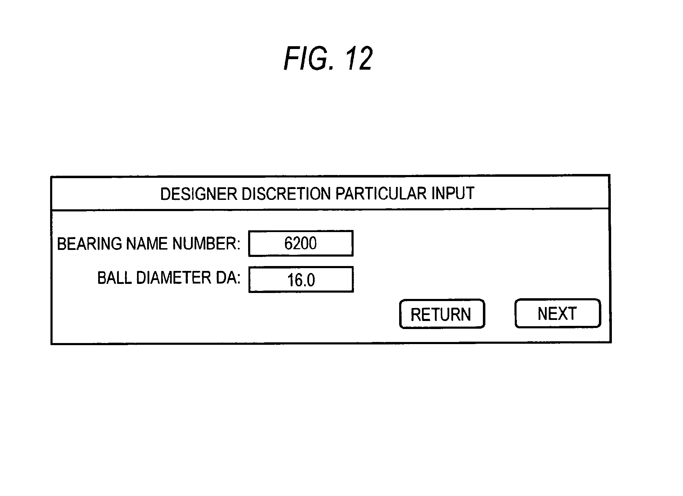

In step S203, designer discretion particulars are inputted to the designer discretion particular input means 2. Since description is made by taking product design of the ball bearing as an example this time, a ball diameter corresponds to designer discretion particulars capable of being decided by the discretion of the designer. A name number given to this design product is simultaneously inputted and is used as a database storage key of design outcome storage processing or a drawing frame at the time of creating a drawing. Fig. 12 shows a designer discretion particular input screen of the designer discretion particular input means 2. The designer inputs a bearing name number and a value of a ball diameter DA and inputs designer discretion particulars on the screen shown in this Fig. 12. After the designer discretion particulars are inputted, "Next" is clicked and the input is confirmed.

In step S204, the design rule database calling means 71 reads design rule data out of the design rule database 4. Here, for example, the design rule data as shown in Fig. 7 or Fig. 8 is read out.

In step S205, the automated design means 72 performs automated design processing based on the design requirement particulars, the designer discretion particulars and the design rule data. Here, the design requirement particulars and the designer discretion particulars inputted in steps S202 and S203 are calculated from a calculation formula read out in step S204 and a design result is acquired.

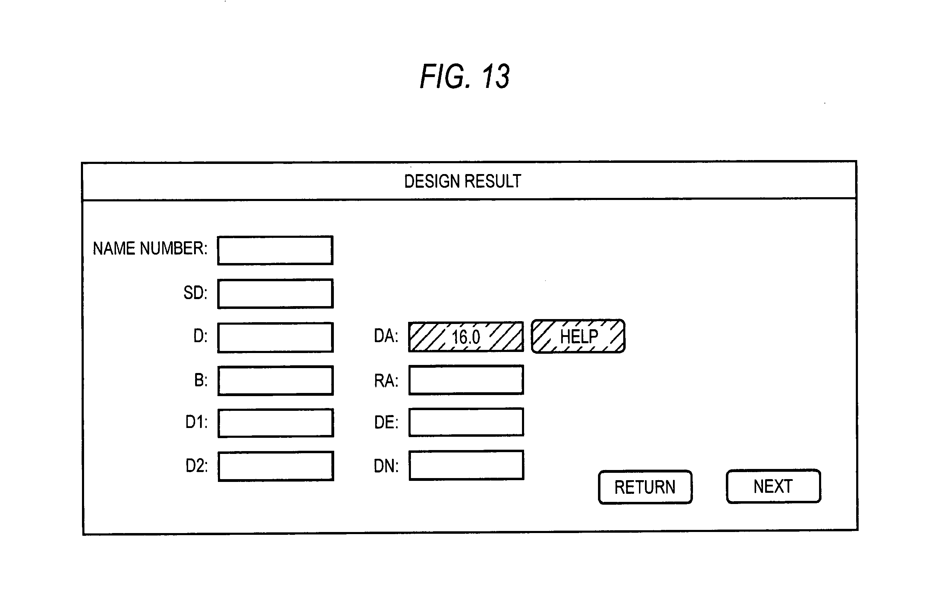

In step S206, a design result check screen is displayed. Fig. 13 shows an example of a design result screen. As shown in this Fig. 13, design values of each of the variables are displayed on the design result screen. The designer is notified to have a problem with the value by performing a highlight of red etc. of a portion having NG on conditions of determination items related to design in the design result screen. For example, the value (16.0) of DA on the screen shown in Fig. 13 is highlighted. In the case of having the problem, a design help screen shown in Fig. 14 can be displayed by clicking a help button located in the right neighborhood of the numeric value with which the problem is had. Name numbers, an ID, the contents of a determination item having NG and advice to solve its problem are displayed on the design help screen shown in this Fig. 14. On this screen, advice is fetched from the latest design rule database 4 and is displayed and with respect to the past design actual results, data such as the past name numbers, condition rules, design values, reference values, automatic OK/NG determinations, final OK/NG and reasons of the cases of special OK can be called from the determination result database 75 and can be displayed. As a result of this, the designer can confirm the design values while considering the past actual results. Also, the reasons of the special cases are retained, so that a design mistake by referring to exceptional cases can be prevented.

In step S207, the determination means 74 performs automatic determination processing of a design result. In this automatic determination, the determination is made based on determination rules including various rules of production related departments, so that it is simultaneously checked whether a result of automated design is good or not from the viewpoint of the production related departments. That is, it becomes unnecessary that the result of automated design should be displayed on paper and a designer or a person of the production related departments should check the result of automated design, and the determination means 74 automatically makes checks of all the items of the rules.

In step S208, determination result data such as a design value, a reference value and an OK/NG decision of each determination item corresponding to the design result is stored in the determination result database 75. The data stored in the determination result database 75 can be retrieved by the retrieval processing means 11 to be used and can aid in design etc. of similar products.

In step S209, it is determined whether a design result is good or not with respect to all the determination items. When it is determined that the design result is good with respect to all the determination items in step S209, creation processing of design outcomes such as 3D models or drawings is performed in step S210.

In step S211, design outcome output processing such as printing output or storage into the design outcome database 10 is performed. Then, the processing is ended in step S212.

On the other hand, when it is not determined that the design result is good with respect to all the determination items in step S209, the action returns to step S203 and the designer reviews the designer discretion particulars and inputs new designer discretion particulars and then performs automated design and automatic determination again. The actions of steps S203 to S209 are repeated until it is determined that the design result is good with respect to all the determination items.

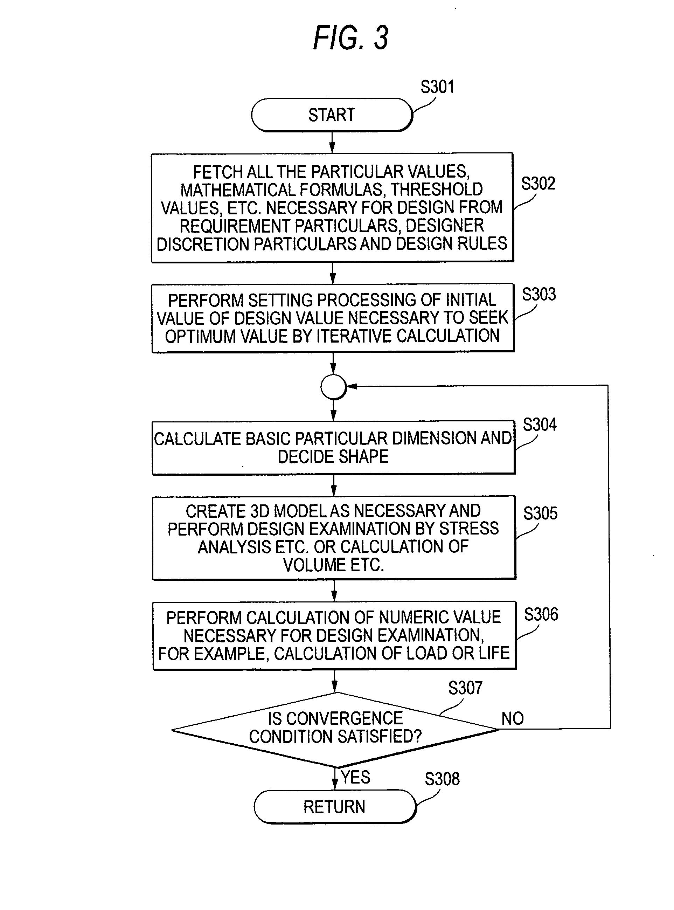

Incidentally, as shown in Fig. 3, when automated design processing is started in step S301, design requirement particulars, designer discretion particulars necessary for design and calculation formulas, threshold values, etc. necessary for design of a product targeted for automated design are fetched from inputted design requirement particulars, designer discretion particulars and readout design rules in step S302.

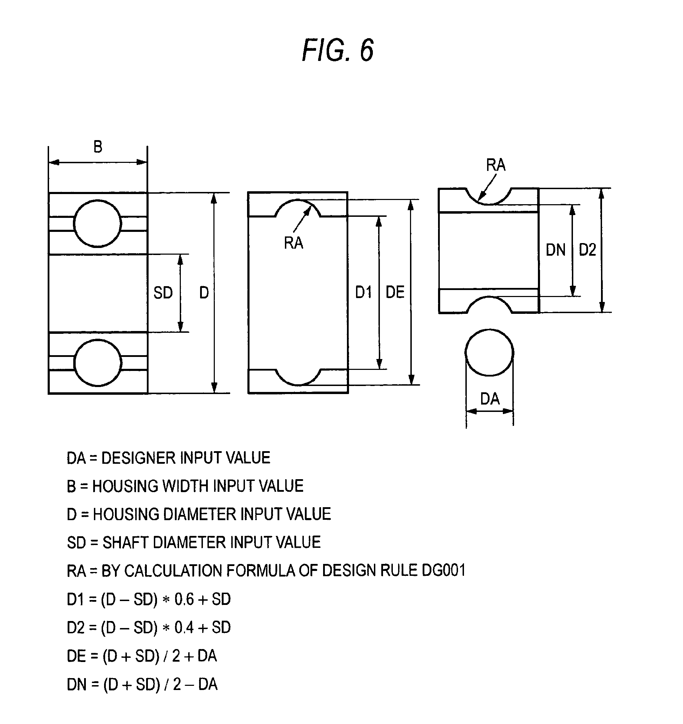

In step S303, initialization of a design value necessary to seek an optimum value is performed by iterative calculation. In step S304 , basic particular dimensions are calculated and a shape is decided. Fig. 6 shows automated design calculation formulas and bearing dimension variable names for calculating the basic particular dimensions and deciding the shape. As shown in Fig. 6, when a ball diameter, a housing width UB, a housing outside diameter UD and a shaft diameter SH are respectively inputted as values of DA, B, D and SD by a designer, each of the variables of bearing dimensions is acquired by each of the following formulas.

```
RA = by calculation formula of design rule DG001 ... (2)
```

```
D1 = (D-SD)*0.6+SD ... (3)
```

```
D2 = (D-SD)*0.4+SD ... (4)
```

```
DE = (D+SD)/2+DA ... (5)
```

```
DN = (D+SD)/2-DA ... (6)
```

The calculation formulas shown in Fig. 6 can also be embedded and fixed in a program, but the calculation formulas or the threshold values, etc. stored in the design rule database 4 may be read out and used. In this case, the calculation formulas can be switched by only updating the database without modifying the program.

In step S305, stress calculation etc. by an analysis system or calculation of volume etc. by 3D model creation are performed and design examination processing related to a design shape is performed as necessary.

In step S306, calculations of numeric values necessary for design examination, for example, load or life calculations are performed. The calculation formulas, the threshold values, etc. fetched from the design rule database 4 as design rules can also be applied to the calculations.

In step S307, it is decided whether or not a convergence condition of iterative calculation is satisfied. The convergence condition of iterative calculation can also be set at a fixed value, or the calculation formulas, the threshold values, etc. fetched from the design rule database 4 as design rules can also be applied to the convergence condition.

When it is determined that the convergence condition of iterative calculation is satisfied in step S307, the automated design processing is ended in step S308 and returns to the processing of Fig. 2 showing the processing of the whole system.

On the other hand, when it is determined that the convergence condition of iterative calculation is not satisfied, the processing returns to step S304 and the automated design processing is again performed and the processing of steps S304 to S307 is repeated until it is determined that the convergence condition of iterative calculation is satisfied.

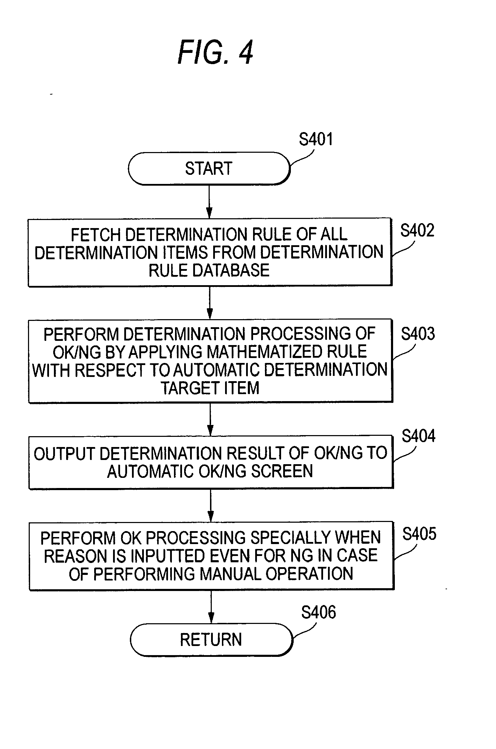

Incidentally, as shown in Fig. 4, when design result automatic decision processing is started in step S401, the determination rule database calling means 73 fetches determination rule data of all the determination target items from the determination rule database 6 in step S402.

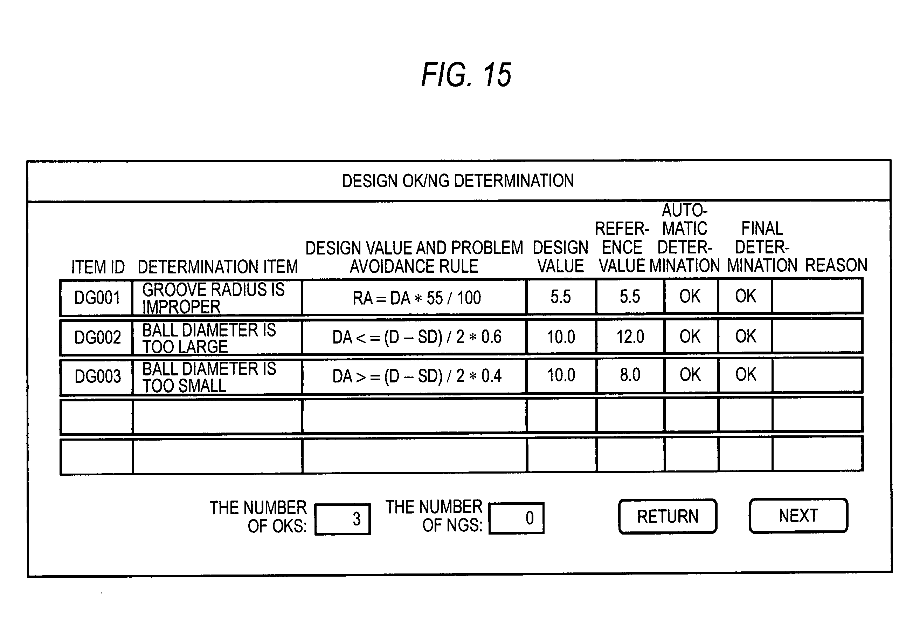

In step S403, the determination means 74 performs determination processing of a design result with respect to all the determination target items. In step S404, a result of automatic determination is outputted to a screen. Fig. 15 shows an example of a determination result screen. As shown in Fig. 15, each of the items such as item IDs, determination items, design value and problem avoidance rules, design values, reference values, automatic determination results, final determination results and reasons is displayed on the determination result screen. By this screen, OK/NG can be checked with respect to all the determination items present in design rules of its product type.

Also, in the case of having a special reason with respect to an item which has become NG in automatic determination, by inputting the reason to a reason field, the item can also be forcibly changed to OK by manual operation. It is configured so that a "Next" button can be pressed only when all become OK and the number of NGs becomes zero. That is, in step S405, OK processing is specially performed when the reason is inputted even for the automatic determination result of NG in the case of performing the manual operation. By this operation, when a special reason is had even in the case of having become NG in automatic decision, the item can also be forcibly changed to OK by manual operation by inputting the reason. Therefore, a situation in which design data with a problem flows to a factory in a form of a manufacturing drawing etc. and a quality problem is caused can be prevented. In step S406, the processing returns to the processing of Fig. 2 showing the processing of the whole system.

According to the automated design system of the invention, it is automatically determined whether a design result obtained by the automated design means 72 is good or not based on the determination rules stored in the determination rule database 6 and including rules to be satisfied by design of the product in the case of manufacturing the product, so that in the case of designing the product, a problem about manufacture can be avoided to achieve an improvement in accuracy and a saving in labor of quality determination business of the design result. Therefore, high quality and high efficiency of product design can be achieved at low cost.

Also, according to the automated design systemof the invention, when the latest determination rule is inputted to the determination rule database input means 5 and is stored in the determination rule database 6, it can be determined whether a design result is good or not based on the latest determination rule. Also, a design rule stored in the design rule database 4 is updated based on a determination result obtained by the determination means 74 and stored in the determination result database 75, so that automated design can be performed based on the latest design rule.

Therefore, the past determination results can be retained and seen and thereby, decision of a designer can be supported and a decrease in mistakes and a speedup in design can be expected.

Also, a threshold value or a calculation formula with a relatively high frequency of change is cut out by a program and is stored in the design rule database 4 and thereby, in the case of modifying the threshold value or the calculation formula, an automated design function can flexibly be modified without modifying the program. As a result of this, the latest design rule can be reflected on the automated design system without the intervention of a program engineer.

Also, by storing a threshold value, a calculation formula, etc. extracted from-know-how of a skilled designer in the design rule database 4 and implementing the automated design thereby, design close to the skilled designer can be performed even for an inexperienced designer.

By repeating that every time a problem occurs, a cause is sought and a rule of avoiding its problem is reflected on the design rule database 4, the automated design system capable of continuous evolution subsequently as well as merely systematizing a design method of a skilled designer at a point in time can be implemented.

Incidentally, in the description of the embodiment described above, design of a simple ball bearing has been taken as an example, but it goes without saying that the invention can be similarly applied to design of a cylindrical roller bearing, a hub bearing, a needle bearing, etc.

The invention has been described in detail with reference to the particular aspect, but it is apparent to those skilled in the art that various changes and modifications can be made without departing from the spirit and the scope of the invention.

The present application is based on a Japanese patent application (Japanese Patent Application No. 2004-125086) filed on April 21, 2004, the disclosure of which is hereby incorporated by reference.

<Industrial Applicability>

An automated design system, an automated design method, an automated design program according to the invention and a record medium on which the automated design program is recorded are useful in the case of performing automated design using a computer.

Drawings

Fig. 1

| 1 | DESIGN REQUIREMENT PARTICULAR INPUT MEANS |
|---|---|
| 2 | DESIGNER DISCRETION PARTICULAR INPUT MEANS |
| 3 | DESIGN RULE DATABASE INPUT MEANS |
| 4 | DESIGN RULE DATABASE |
| 5 | DETERMINATION RULE DATABASE INPUT MEANS |
| 6 | DETERMINATION RULE DATABASE |
| 7 | AUTOMATED DESIGN AND AUTOMATIC DETERMINATION PROCESSING MEANS |
| 8 | DESIGN OUTCOME CREATION MEANS OF DRAWING, 3D MODEL, ETC. |
| 9 | DESIGN OUTCOME OUTPUT MEANS |
| 10 | DESIGN OUTCOME DATABASE |
| 11 | RETRIEVAL PROCESSING MEANS |
| 12 | RETRIEVAL RESULT DISPLAY MEANS |
| 71 | DESIGN RULE DATABASE CALLING MEANS |
| 72 | AUTOMATED DESIGN MEANS |
| 73 | DETERMINATION RULE DATABASE CALLING MEANS |
| 74 | DETERMINATION MEANS BY DETERMINATION RULE OF EACH ITEM |
| 75 | DETERMINATION RESULT DATABASE |
| A1 | DESIGN OUTCOME PRINTING OUTPUT |

Fig. 2

| S201 | START |
|---|---|
| S202 | INPUT REQUIREMENT CONDITION |
| S203 | INPUT DESIGNER DISCRETION PARTICULARS |
| S204 | READ OUT DESIGN RULE |
| S205 | AUTOMATED DESIGN PROCESSING |
| S206 | CHECK DESIGN RESULT |
| S207 | AUTOMATIC DETERMINATION PROCESSING OF DESIGN RESULT |
| S208 | STORE DETERMINATION RESULT |
| S209 | ALL THE ITEMS OK? |
| S210 | CREATION PROCESSING OF DESIGN OUTCOME |
| S211 | OUTPUT PROCESSING OF DESIGN OUTCOME |
| S212 | END |

Fig. 3

S301 START
S302 FETCH ALL THE PARTICULAR VALUES, MATHEMATICAL FORMULAS, THRESHOLD VALUES, ETC. NECESSARY FOR DESIGN FROM REQUIREMENT PARTICULARS, DESIGNER DISCRETION PARTICULARS AND DESIGN RULES
S303 PERFORM SETTING PROCESSING OF INITIAL VALUE OF DESIGN VALUE NECESSARY TO SEEK OPTIMUM VALUE BY ITERATIVE CALCULATION
S304 CALCULATE BASIC PARTICULAR DIMENSION AND DECIDE SHAPE
S305 CREATE 3D MODEL AS NECESSARY AND PERFORM DESIGN EXAMINATION BY STRESS ANALYSIS ETC. OR CALCULATION OF VOLUME ETC.
S306 PERFORM CALCULATION OF NUMERIC VALUE NECESSARY FOR DESIGN EXAMINATION, FOR EXAMPLE, CALCULATION OF LOAD OR LIFE
S307 IS CONVERGENCE CONDITION SATISFIED?
S308 RETURN

Fig. 4

S401 START

S402 FETCH DETERMINATION RULE OF ALL THE DETERMINATION ITEMS FROM DETERMINATION RULE DATABASE

S403 PERFORM DETERMINATION PROCESSING OF OK/NG BY APPLYING MATHEMATIZED RULE WITH RESPECT TO AUTOMATIC DETERMINATION TARGET ITEM

S404 OUTPUT DETERMINATION RESULT OF OK/NG TO AUTOMATIC OK/NG SCREEN S405 PERFORM OK PROCESSING SPECIALLY WHEN REASON IS INPUTTED EVEN FOR NG IN THE CASE OF PERFORMING MANUAL OPERATION

S406 RETURN

Fig. 5

Fig. 6

A1    DESIGNER INPUT VALUE
A2    HOUSING WIDTH INPUT VALUE
A3    HOUSING DIAMETER INPUT VALUE
A4    SHAFT DIAMETER INPUT VALUE
A5    BY CALCULATION FORMULA OF DESIGN RULE DG001

Fig. 7

A1    DESIGN RULE EXPANSION
A2    DESIGN VALUE AND PROBLEM AVOIDANCE RULE
A3    ADVICE
A4    BASIS MATERIAL
A5    ITEM ID
A6    BEARING DOES NOT FUNCTION
A7    GROOVE RADIUS IS IMPROPER
A8    BALL DIAMETER IS TOO LARGE
A9    BALL DIAMETER IS TOO SMALL
A10   DECREASE BALL DIAMETER
A11   INCREASE BALL DIAMETER
A12   PROVISION
A13   EXPERIMENT
A14   REPORT

Fig. 8

A1 PROVISION NUMBER
A2 DATE OF EFFECT
A3 VERSION
A4 DESIGN REFERENCE OF GROOVE RADIUS AND BALL DIAMETER OF BALL BEARING
A5 1. SCOPE OF APPLICATION
A DESIGN METHOD OF A BALL BEARING DEFINED BELOW SHOULD BE APPLIED TO DESIGN OF BALL BEARINGS FOR GENERAL USE EXCLUDING BALL BEARINGS FOR SPECIAL USE DEFINED SEPARATELY.
A6 2. SCOPE OF BALL DIAMETER (DA)
DECIDE A BALL DIAMETER SOAS TO SATISFY THE FOLLOWING TWO FORMULAS IN ORDER TO AVOID A PROBLEM THAT THE BEARING DOES NOT FUNCTION.
A7 AVOIDANCE METHOD OF PROBLEM THAT BALL DIAMETER IS TOO LARGE
A8 AVOIDANCE METHOD OF PROBLEM THAT BALL DIAMETER IS TOO SMALL
A9 REFERENCE DOCUMENT: Xx EXPERIMENT 002, REPORT 034
A10 3. CALCULATION METHOD OF GROOVE RADIUS (RA)
CALCULATE GROOVE RADII OF AN OUTER RING AND AN INNER RING BY THE FOLLOWING CALCULATION FORMULA IN ORDER TO AVOID A PROBLEM THAT THE BEARING DOES NOT FUNCTION.
All CALCULATION FORMULA IN WHICH GROOVE RADIUS DOES NOT BECOME IMPROPER
A12 REFERENCE DOCUMENT: AA PROVISION 001

Fig. 9

A1 RULE NAME
A2 DESCRIPTION OF RULE
A3 COMPONENT INVENTORY COOPERATION RULE: RULE OF, FOR EXAMPLE, PREFERENTIALLY SELECTING COMPONENT WITH A LARGER NUMBER OF INVENTORIES OR PRESENCE OR ABSENCE OF INVENTORY AT THE TIME OF SELECTION OF COMPONENT BUILT IN PRODUCT
A4 PURCHASE COMPONENT SELECTION RULE: RULE OF, FOR EXAMPLE, SELECTING COMPONENT CAPABLE OF BEING STABLY SUPPLIED, CHEAP COMPONENT FROM AMONG PURCHASE COMPONENTS SATISFYING CONDITIONS OF PRODUCT A5 MATERIAL SELECTION RULE: RULE OF, FOR EXAMPLE, SELECTING MATERIAL CAPABLE OF BEING STABLY SUPPLIED, CHEAP MATERIAL FROM AMONG MATERIALS SATISFYING SAME CONDITIONS
A6 TECHNICAL CONDITION RULE OF PRODUCER, FACTORY, LINEANDEQUIPMENT: RULE OF CHECKING WHETHER TO SATISFY CONDITIONS THAT PROCESSING CAN BE PERFORMED IN ACTUAL PRODUCER, FACTORY, LINE AND EQUIPMENT AND PROCESSING IS EASY (CHEAP, QUICK)
A7 OPERATIONAL STATE AND SCHEDULE RULE OF PRODUCER, LINE AND EQUIPMENT: RULE OF PERFORMING DESIGN BASED ON PREMISE THAT CREATION IS PERFORMED BY AVAILABLE PRODUCER, FACTORY, LINE AND EQUIPMENT FROM AMONG PLURAL PRODUCIBLE PRODUCERS, FACTORIES, LINES AND EQUIPMENT IN CONSIDERATION OF AMOUNT OF BUSINESS OF PRODUCTION SCHEDULE STAGE A8 PHYSICAL DISTRIBUTION RELATED RULE: RULE SUCH AS RULE OF LIMITING MAXIMUM DIMENSION OF PRODUCT BECAUSE OF PHYSICAL DISTRIBUTION (FOR EXAMPLE, IT BECOMES DIFFICULT TO PERFORM CONVEYANCE BY LAND ON OPEN ROAD WHEN EXCEEDING CETAIN DIMENSION) OR RULE OF REQUIRING SCREW HOLE OF HOOK FOR TRANSPORT (FOR EXAMPLE, HEAVY LOAD)
A9 ENVIRONMENTAL CONTROL-CAPABLE RULE: RULE OF AVOIDING ENVIRONMENTAL PROBLEMS BY GIVING WARNING IN ORDER TO AVOID ENVIRONMENTAL PROBLEMS SUCH AS CONTENT OF ENVIRONMENTAL CONTROLLED SUBSTANCE IN PRODUCT OR EMISSION OF ENVIRONMENTAL CONTROLLED SUBSTANCE IN MANUFACTURING PROCESS
A10 AFTER-SALES SERVICE-CAPABLE RULE: RULE OF CHECKING WHETHER TO HAVE ENGRAVED MARKS ETC. FOR MAKING IT EASY TO REPLACE COMPONENT OR MAKING IT EASY TO GRASP REPLACEMENT COMPONENT SO AS TO EASE AFTER-SALES SERVICE AFTER PRODUCT IS DELIVERED TO CUSTOMER
A11 CUSTOMER BASIS-CAPABLE RULE: RULE OF CHECKING WHETHER TO SATISFY CONDITION NECESSARY TO SURELY OBEY ON A CUSTOMER BASIS THOUGH CONDITION IS NOT PRESENTED EACH TIME AS DESIGN CONDITION OF INDIVIDUAL PRODUCT
A12 ILLEGAL EXPORT PREVENTION RULE: RULE OF CHECKING WHETHER TO HAVE DESIGN ADAPTED FOR REGULATIONS INCAPABLE OF EXPORTING PRODUCT INCLUDING ADVANCED TECHNIQUE DEPENDING ON PARTNER COUNTRY SUCH AS OVERSEA CUSTOMER
A13 PATENT INFRINGEMENT PREVENTION RULE: RULE OF CHECKING WHETHER TO HAVE DESIGN FOR PREVENTION IN ORDER TO PREVENT DESIGN IN CONFLICT WITH PATENT OF COMPETITOR
A14 ELECTRONIC DATA SYSTEM ADAPTATION RULE: RULE OF CHECKING NAME NUMBERING, ACCURACY SPECIFICATION OF CAD DATA, ETC. AS TO WHETHER TO ADAPT TO SENDING AND RECEIVING OF IN-HOUSE OR CUSTOMER ELECTRONIC DATA SUCH AS FILE NAME OF DATA, DATA FORMAT WHEN DESIGN OUTCOMES ARE ELECTRONIC DATA OF CAD ETC.

Fig. 10

A1 NAME NUMBER
A2 ITEM ID
A3 DETERMINATION ITEM
A4 DESIGN VALUE AND PROBLEM AVOIDANCE RULE
A5 DESIGN VALUE
A6 REFERENCE VALUE
A7 AUTOMATIC DETERMINATION
A8 FINAL DETERMINATION
A9 REASON
A10 GROOVE RADIUS IS IMPROPER
A11 BALL DIAMETER IS TOO LARGE

A12    BALL DIAMETER IS TOO SMALL
A13    GROOVE RADIUS IS IMPROPER
A14    BALL DIAMETER IS TOO LARGE
A15    BALL DIAMETER IS TOO SMALL
A16    FACTORY
A17    OK BY CONFERENCE WITH FACTORY


Fig. 11


A1    DESIGN CONDITION INPUT OF BEARING
A2    HOUSING OUTSIDE DIAMETER
A3    HOUSING WIDTH
A4    SHAFT DIAMETER
A5    NEXT


Fig. 12


A1    DESIGNER DISCRETION PARTICULAR INPUT
A2    BEARING NAME NUMBER
A3    BALL DIAMETER
A4    RETURN
A5    NEXT


Fig. 13


A1    DESIGN RESULT
A2    NAME NUMBER
A3    HELP


A4    RETURN
A5    NEXT


Fig. 14


A1    DESIGN HELP
A2    NAME NUMBER
A3    DETERMINATION ITEM
A4    ADVICE
A5    BALL DIAMETER IS TOO LARGE
A6    DECREASE BALL DIAMETER
A7    NAME NUMBER
A8    CONDITION RULE
A9    DESIGN VALUE
A10    REFERENCE VALUE
A11    AUTOMATIC DETERMINATION
A12    FINAL DETERMINATION
A13    SPECIAL OK REASON
A14    CONFERENCE WITH FACTORY


Fig. 15


A1    DESIGN OK/NG DETERMINATION
A2    ITEM ID
A3    DETERMINATION ITEM
A4    DESIGN VALUE AND PROBLEM AVOIDANCE RULE
A5    DESIGN VALUE
A6    REFERENCE VALUE
A7    AUTOMATIC DETERMINATION

A8     FINAL DETERMINATION
A9     REASON
A10    GROOVE RADIUS IS IMPROPER
A11    BALL DIAMETER IS TOO LARGE
A12    BALL DIAMETER IS TOO SMALL
A13    THE NUMBER OF OKS
A14    THE NUMBER OF NGS
A15    RETURN
A16    NEXT

Fig. 16

A1     PRODUCT DESIGN
A2     MANUFACTURING PROCESS DESIGN
A3     INTERMEDIATE COMPONENT DESIGN
A4     MANUFACTURING LINE DESIGN

**Claims**

1. An automated design system for performing automated design of a product using design requirement particulars required with respect to the product targeted for the automated design, designer discretion particulars by discretion of a designer with respect to design of the product and a design rule necessary for the design of the product, **characterized by** comprising:

   design rule storage means for storing the design rule,
   automated design means for performing automated design using the design requirement particulars, the designer discretion particulars and the design rule,
   determination rule input means for inputting a determination rule including a rule to be satisfied by design of the product in the case of manufacturing the product,
   determination rule storage means for storing the determination rule, and
   design result determinationmeans for determining whether a design result obtained by the automated design means is good or not based on the determination rule stored in the determination rule storage means.

2. An automated design system as claimed in claim 1, **characterized in that** the system further comprises determination result storage means for storing a determination result obtained by the design result determination means and the design rule stored in the design rule storage means is updated based on the determination result.

3. An automated design method **characterized by** having:

   a design rule storage step of previously storing a design rule necessary for design of a product targeted for automated design,
   a determination rule storage step of.previously storing a determination rule including a rule to be satisfied by design of the product in the case of manufacturing the product,
   a design requirement particular input step of inputting design requirement particulars required with respect to the product,
   a designer discretion particular input step of inputting designer discretion particulars by discretion of a designer with respect to design of the product,
   an automated design step of reading out the design rule stored in the design rule storage step and performing automated design using said design rule, the design requirement particulars and the designer discretion particulars, and
   a design result determination step of reading out the determination rule stored in the determination rule storage step and automatically determining whether a design result obtained by the automated design step is good or not based on said determination rule.

4. An automated design method as claimed in claim 3, **characterized by** further having:

   a determination result storage step of storing a determination result obtained by the design result determination step, and
a design rule updating step of reading out the determination result stored in the determination result storage step and updating the design rule stored in the design rule storage step based on said determination result.

5. An automated design program for making a computer execute processing including:

design rule storage processing for previously storing a design rule necessary for design of a product targeted for automated design,
determination rule storage processing for previously storing a determination rule including a rule to be satisfied by design of the product in the case of manufacturing the product,
design requirement particular input processing for inputting design requirement particulars required with respect to the product,
designer discretion particular input processing for inputting designer discretion particulars by discretion of a designer with respect to design of the product,
automated design processing for reading out the design rule stored in the design rule storage processing and performing automated design using said design rule, the design requirement particulars and the designer discretion particulars, and
design result determination processing for reading out the determination rule stored in the determination rule storage processing and automatically determining whether a design result obtained by the automated design processing is good or not based on said determination rule.

6. An automated design program as claimed in claim 5, for making a computer execute processing further including:

determination result storage processing for storing a determination result obtained by the design result determination processing, and
design rule updating processing for reading out the determination result stored in the determination result storage processing and updating the design rule stored in the design rule storage processing based on said determination result.

## FIG. 1

# FIG. 2

S201
START

S202
INPUT REQUIREMENT CONDITION

S203
INPUT DESIGNER DISCRETION PARTICULARS

S204
READ OUT DESIGN RULE

S205
AUTOMATED DESIGN PROCESSING

S206
CHECK DESIGN RESULT

S207
AUTOMATIC DETERMINATION
PROCESSING OF DESIGN RESULT

S208
STORE DETERMINATION RESULT

S209
ALL THE ITEMS OK?   NO

YES

S210
CREATION PROCESSING OF DESIGN OUTCOME

S211
OUTPUT PROCESSING OF DESIGN OUTCOME

S212
END

# FIG. 3

START — S301

FETCH ALL THE PARTICULAR VALUES, MATHEMATICAL FORMULAS, THRESHOLD VALUES, ETC. NECESSARY FOR DESIGN FROM REQUIREMENT PARTICULARS, DESIGNER DISCRETION PARTICULARS AND DESIGN RULES — S302

PERFORM SETTING PROCESSING OF INITIAL VALUE OF DESIGN VALUE NECESSARY TO SEEK OPTIMUM VALUE BY ITERATIVE CALCULATION — S303

CALCULATE BASIC PARTICULAR DIMENSION AND DECIDE SHAPE — S304

CREATE 3D MODEL AS NECESSARY AND PERFORM DESIGN EXAMINATION BY STRESS ANALYSIS ETC. OR CALCULATION OF VOLUME ETC. — S305

PERFORM CALCULATION OF NUMERIC VALUE NECESSARY FOR DESIGN EXAMINATION, FOR EXAMPLE, CALCULATION OF LOAD OR LIFE — S306

IS CONVERGENCE CONDITION SATISFIED? — S307  NO

YES  S308

RETURN

18

# FIG. 4

START — S401

↓

FETCH DETERMINATION RULE OF ALL DETERMINATION ITEMS FROM DETERMINATION RULE DATABASE — S402

↓

PERFORM DETERMINATION PROCESSING OF OK/NG BY APPLYING MATHEMATIZED RULE WITH RESPECT TO AUTOMATIC DETERMINATION TARGET ITEM — S403

↓

OUTPUT DETERMINATION RESULT OF OK/NG TO AUTOMATIC OK/NG SCREEN — S404

↓

PERFORM OK PROCESSING SPECIALLY WHEN REASON IS INPUTTED EVEN FOR NG IN CASE OF PERFORMING MANUAL OPERATION — S405

↓

RETURN — S406

# FIG. 5

# FIG. 6

DA = DESIGNER INPUT VALUE

B = HOUSING WIDTH INPUT VALUE

D = HOUSING DIAMETER INPUT VALUE

SD = SHAFT DIAMETER INPUT VALUE

RA = BY CALCULATION FORMULA OF DESIGN RULE DG001

$D1 = (D - SD) * 0.6 + SD$

$D2 = (D - SD) * 0.4 + SD$

$DE = (D + SD) / 2 + DA$

$DN = (D + SD) / 2 - DA$

## FIG. 7

| DESIGN RULE EXPANSION | DESIGN VALUE AND PROBLEM AVOIDANCE RULE | ADVICE | BASIS MATERIAL | ITEM ID |
|---|---|---|---|---|
| BEARING DOES NOT FUNCTION | | | | |
| GROOVE RADIUS IS IMPROPER | $RA = DA * 55 / 100$ | | AA PROVISION 001 | DG001 |
| BALL DIAMETER IS TOO LARGE | $DA <= (D - SD) / 2 * 0.6$ | DECREASE BALL DIAMETER | Xx EXPERIMENT 002 | DG002 |
| BALL DIAMETER IS TOO SMALL | $DA >= (D - SD) / 2 * 0.4$ | INCREASE BALL DIAMETER | REPORT 034 | DG003 |

EP 1 657 658 A1

# FIG. 8

PROVISION NUMBER: NSK00123
DATE OF EFFECT: 2003/10/30
VERSION: 01-03

### DESIGN REFERENCE OF GROOVE RADIUS AND BALL DIAMETER OF BALL BEARING

1. SCOPE OF APPLICATION
   A DESIGN METHOD OF A BALL BEARING DEFINED BELOW SHOULD BE APPLIED TO DESIGN OF BALL BEARINGS FOR GENERAL USE EXCLUDING BALL BEARINGS FOR SPECIAL USE DEFINED SEPARATELY.

2. SCOPE OF BALL DIAMETER (DA)
   DECIDE A BALL DIAMETER SO AS TO SATISFY THE FOLLOWING TWO FORMULAS IN ORDER TO AVOID A PROBLEM THAT THE BEARING DOES NOT FUNCTION.

AVOIDANCE METHOD OF PROBLEM THAT BALL DIAMETER IS TOO LARGE

$$DA <= (D - SD) / 2 * 0.6 \qquad ID = (DG002)$$

AVOIDANCE METHOD OF PROBLEM THAT BALL DIAMETER IS TOO SMALL

$$DA >= (D - SD) / 2 * 0.4 \qquad ID = (DG003)$$

REFERENCE DOCUMENT: Xx EXPERIMENT 002, REPORT 034

3. CALCULATION METHOD OF GROOVE RADIUS (RA)
   CALCULATE GROOVE RADII OF AN OUTER RING AND AN INNER RING BY THE FOLLOWING CALCULATION FORMULA IN ORDER TO AVOID A PROBLEM THAT THE BEARING DOES NOT FUNCTION.

CALCULATION FORMULA IN WHICH GROOVE RADIUS DOES NOT BECOME IMPROPER

$$RA = DA * 55 / 100 \qquad ID = (DG001)$$

REFERENCE DOCUMENT: AA PROVISION 001

## FIG. 9

| RULE NAME | DESCRIPTION OF RULE |
|---|---|
| COMPONENT INVENTORY COOPERATION RULE: | RULE OF, FOR EXAMPLE, PREFERENTIALLY SELECTING COMPONENT WITH A LARGER NUMBER OF INVENTORIES OR PRESENCE OR ABSENCE OF INVENTORY AT THE TIME OF SELECTION OF COMPONENT BUILT IN PRODUCT |
| PURCHASE COMPONENT SELECTION RULE: | RULE OF, FOR EXAMPLE, SELECTING COMPONENT CAPABLE OF BEING STABLY SUPPLIED, CHEAP COMPONENT FROM AMONG PURCHASE COMPONENTS SATISFYING CONDITIONS OF PRODUCT |
| MATERIAL SELECTION RULE: | RULE OF, FOR EXAMPLE, SELECTING MATERIAL CAPABLE OF BEING STABLY SUPPLIED, CHEAP MATERIAL FROM AMONG MATERIALS SATISFYING SAME CONDITIONS |
| TECHNICAL CONDITION RULE OF PRODUCER, FACTORY, LINE AND EQUIPMENT: | RULE OF CHECKING WHETHER TO SATISFY CONDITIONS THAT PROCESSING CAN BE PERFORMED IN ACTUAL PRODUCER, FACTORY, LINE AND EQUIPMENT AND PROCESSING IS EASY (CHEAP, QUICK) |
| OPERATIONAL STATE AND SCHEDULE RULE OF PRODUCER, LINE AND EQUIPMENT: | RULE OF PERFORMING DESIGN BASED ON PREMISE THAT CREATION IS PERFORMED BY AVAILABLE PRODUCER, FACTORY, LINE AND EQUIPMENT FROM AMONG PLURAL PRODUCIBLE PRODUCERS, FACTORIES, LINES AND EQUIPMENT IN CONSIDERATION OF AMOUNT OF BUSINESS OF PRODUCTION SCHEDULE STAGE |
| PHYSICAL DISTRIBUT-ION RELATED RULE: | RULE SUCH AS RULE OF LIMITING MAXIMUM DIMENSION OF PRODUCT BECAUSE OF PHYSICAL DISTRIBUTION (FOR EXAMPLE, IT BECOMES DIFFICULT TO PERFORM CONVEYANCE BY LAND ON OPEN ROAD WHEN EXCEEDING CETAIN DIMENSION) OR RULE OF REQUIRING SCREW HOLE OF HOOK FOR TRANSPORT (FOR EXAMPLE, HEAVY LOAD) |
| ENVIRONMENTAL CONTROL-CAPABLE RULE: | RULE OF AVOIDING ENVIRONMENTAL PROBLEMS BY GIVING WARNING IN ORDER TO AVOID ENVIRONMENTAL PROBLEMS SUCH AS CONTENT OF ENVIRONMENTAL CONTROLLED SUBSTANCE IN PRODUCT OR EMISSION OF ENVIRONMENTAL CONTROLLED SUBSTANCE IN MANU-FACTURING PROCESS |
| AFTER-SALES SERVICE-CAPABLE RULE: | RULE OF CHECKING WHETHER TO HAVE ENGRAVED MARKS ETC. FOR MAKING IT EASY TO REPLACE COMPONENT OR MAKING IT EASY TO GRASP REPLACEMENT COMPONENT SO AS TO EASE AFTER-SALES SERVICE AFTER PRODUCT IS DELIVERED TO CUSTOMER |
| CUSTOMER BASIS-CAPABLE RULE: | RULE OF CHECKING WHETHER TO SATISFY CONDITION NECESSARY TO SURELY OBEY ON A CUSTOMER BASIS THOUGH CONDITION IS NOT PRESENTED EACH TIME AS DESIGN CONDITION OF INDIVIDUAL PRODUCT |
| ILLEGAL EXPORT PREVENTION RULE: | RULE OF CHECKING WHETHER TO HAVE DESIGN ADAPTED FOR REGULATIONS INCAPABLE OF EXPORTING PRODUCT INCLUDING ADVANCED TECHNIQUE DEPENDING ON PARTNER COUNTRY SUCH AS OVERSEA CUSTOMER |
| PATENT INFRINGEMENT PREVENTION RULE: | RULE OF CHECKING WHETHER TO HAVE DESIGN FOR PREVENTION IN ORDER TO PREVENT DESIGN IN CONFLICT WITH PATENT OF COMPETITOR |
| ELECTRONIC DATA SYSTEM ADAPTATION RULE: | RULE OF CHECKING NAME NUMBERING, ACCURACY SPECIFICATION OF CAD DATA, ETC. AS TO WHETHER TO ADAPT TO SENDING AND RECEIVING OF IN-HOUSE OR CUSTOMER ELECTRONIC DATA SUCH AS FILE NAME OF DATA, DATA FORMAT WHEN DESIGN OUTCOMES ARE ELECTRONIC DATA OF CAD ETC. |

FIG. 10

EP 1 657 658 A1

| NAME NUMBER | ITEM ID | DETERMINATION ITEM | DESIGN VALUE AND PROBLEM AVOIDANCE RULE | DESIGN VALUE | REFERENCE VALUE | AUTOMATIC DETERMINATION | FINAL DETER-MINATION | REASON |
|---|---|---|---|---|---|---|---|---|
| 6304 | DG001 | GROOVE RADIUS IS IMPROPER | RA = DA * 55 / 100 | 11.0 | 11.0 | OK | OK | |
| 6304 | DG002 | BALL DIAMETER IS TOO LARGE | DA < = (D − SD) / 2 * 0.6 | 20.0 | 24.0 | OK | OK | |
| 6304 | DG003 | BALL DIAMETER IS TOO SMALL | DA > = (D − SD) / 2 * 0.4 | 20.0 | 16.0 | OK | OK | |
| 608 | DG001 | GROOVE RADIUS IS IMPROPER | RA = DA * 55 / 100 | 33.0 | 33.0 | OK | OK | |
| 608 | DG002 | BALL DIAMETER IS TOO LARGE | DA < = (D − SD) / 2 * 0.6 | 36.1 | 36.0 | NG | OK | FACTORY |
| 608 | DG003 | BALL DIAMETER IS TOO SMALL | DA > = (D − SD) / 2 * 0.4 | 36.1 | 24.0 | OK | OK | |

OK BY CONFERENCE WITH FACTORY

## FIG. 11

| DESIGN CONDITION INPUT OF BEARING | | |
|---|---|---|
| HOUSING OUTSIDE DIAMETER UD: | 60.0 | |
| HOUSING WIDTH UB: | 20.0 | |
| SHAFT DIAMETER SH: | 20.0 | NEXT |

# FIG. 12

| DESIGNER DISCRETION PARTICULAR INPUT | | |
|---|---|---|
| BEARING NAME NUMBER: | 6200 | |
| BALL DIAMETER DA: | 16.0 | |
| | RETURN | NEXT |

## FIG. 13

EP 1 657 658 A1

### DESIGN RESULT

NAME NUMBER: ☐

SD: ☐

D: ☐          DA: ☐ 16.0 ☐   ☐ HELP ☐

B: ☐          RA: ☐

D1: ☐         DE: ☐

D2: ☐         DN: ☐

RETURN    NEXT

## FIG. 14

EP 1 657 658 A1

**DESIGN HELP**

| NAME NUMBER | ID: | DETERMINATION ITEM | ADVICE | |
|---|---|---|---|---|
| 6200 | DG002 | BALL DIAMETER IS TOO LARGE | DECREASE BALL DIAMETER | OK |

| NAME NUMBER | CONDITION RULE | DESIGN VALUE | REFER-ENCE VALUE | AUTO-MATIC DETER-MINATION | FINAL DETER-MINATION | SPECIAL OK REASON |
|---|---|---|---|---|---|---|
| 6304 | DA < = (D − SD) / 2 * 0.6 | 20.0 | 24.0 | OK | OK | |
| 608 | DA < = (D − SD) / 2 * 0.6 | 36.1 | 36.0 | NG | OK | CONFERENCE WITH FACTORY |
| | | | | | | |
| | | | | | | |

## FIG. 15

EP 1 657 658 A1

| | | | | | AUTO-MATIC | FINAL | |
|---|---|---|---|---|---|---|---|
| ITEM ID | DETERMINATION ITEM | DESIGN VALUE AND PROBLEM AVOIDANCE RULE | DESIGN VALUE | REFER-ENCE VALUE | DETER-MINATION | DETER-MINATION | REASON |
| DG001 | GROOVE RADIUS IS IMPROPER | RA = DA * 55 / 100 | 5.5 | 5.5 | OK | OK | |
| DG002 | BALL DIAMETER IS TOO LARGE | DA < = (D − SD) / 2 * 0.6 | 10.0 | 12.0 | OK | OK | |
| DG003 | BALL DIAMETER IS TOO SMALL | DA > = (D − SD) / 2 * 0.4 | 10.0 | 8.0 | OK | OK | |
| | | | | | | | |
| | | | | | | | |

DESIGN OK/NG DETERMINATION

THE NUMBER OF OKS: 3    THE NUMBER OF NGS: 0    RETURN    NEXT

# FIG. 16

```
┌──────────────────────────────────┐
│         PRODUCT DESIGN           │
└──────────────────────────────────┘
                 │
                 ▼
┌──────────────────────────────────┐
│  MANUFACTURING PROCESS DESIGN    │
└──────────────────────────────────┘
                 │
                 ▼
┌──────────────────────────────────┐
│  INTERMEDIATE COMPONENT DESIGN   │
└──────────────────────────────────┘
                 │
                 ▼
┌──────────────────────────────────┐
│    MANUFACTURING LINE DESIGN     │
└──────────────────────────────────┘
```

**INTERNATIONAL SEARCH REPORT**

| International application No. |
| --- |
| PCT/JP2005/001308 |

A.  CLASSIFICATION OF SUBJECT MATTER
   Int.Cl$^7$  G06F17/50

According to International Patent Classification (IPC) or to both national classification and IPC

B.  FIELDS SEARCHED

Minimum documentation searched (classification system followed by classification symbols)
   Int.Cl$^7$  G06F17/50

Documentation searched other than minimum documentation to the extent that such documents are included in the fields searched

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 08-241338 A  (Toyota Motor Corp.),<br>17 September, 1996 (17.09.96),<br>Full text; all drawings<br>(Family: none) | 1-6 |
| X | JP 11-120000 A  (Sekisui Chemical Co., Ltd.),<br>30 April, 1999 (30.04.99),<br>Full text; all drawings<br>(Family: none) | 1-6 |
| A | JP 2002-318891 A  (Toshiba Micro-Electronics Corp.),<br>31 October, 2002 (31.10.02),<br>Full text; all drawings<br>& US 2003/69659 A1        & EP 1253536 A1 | 1-6 |

☒  Further documents are listed in the continuation of Box C.          ☐  See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>   15 March, 2005 (15.03.05) | Date of mailing of the international search report<br>   05 April, 2005 (05.04.05) |
| --- | --- |
| Name and mailing address of the ISA/<br>   Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/001308 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-296383 A  (Denso Corp.),<br>17 October, 2003 (17.10.03),<br>Full text; all drawings<br>& US 2003/189566 A1 | 1-6 |

Form PCT/ISA/210 (continuation of second sheet) (January 2004)